(19) Europäisches Patentamt / European Patent Office / Office européen des brevets

(11) **EP 4 088 882 A1**

(12) **EUROPEAN PATENT APPLICATION**

(43) Date of publication:
**16.11.2022 Bulletin 2022/46**

(21) Application number: **21172956.1**

(22) Date of filing: **10.05.2021**

(51) International Patent Classification (IPC):
**B25J 9/16** *(2006.01)*    **B25J 5/00** *(2006.01)*

(52) Cooperative Patent Classification (CPC):
**B25J 9/1671; B25J 5/007; B25J 9/0084;**
**B25J 9/1689;** G05B 2219/39109;
G05B 2219/39135; G05B 2219/39172;
G05B 2219/39174; G05B 2219/39451;
G05B 2219/40131; G05B 2219/40298

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
• **Kumar, Nitish**
**9470 Buchs (CH)**

• **Korl, Sascha**
**9470 Buchs (CH)**
• **Kennel-Maushart, Florian**
**8044 Zürich (CH)**
• **Poranne, Roi**
**8050 Zürich (CH)**
• **Coros, Stelian**
**8044 Zürich (CH)**

(74) Representative: **Hilti Aktiengesellschaft**
**Corporate Intellectual Property**
**Feldkircherstrasse 100**
**Postfach 333**
**9494 Schaan (LI)**

(54) **METHOD OF MANIPULATING A CONSTRUCTION OBJECT, CONSTRUCTION ROBOT SYSTEM, AND COMPUTER PROGRAM PRODUCT**

(57)     The invention relates to a method (10) of manipulating a construction object (101) on a construction site, for example positioning, moving, or working the construction object, using a construction robot system (100), wherein the construction robot system (100) comprises at least two robotic arms (110). According to the invention a controller virtually manipulates a virtual representation of the construction object (101'), and a control unit (104) of the construction robot system (100) controls the robotic arms (110) such that the construction object (101) is manipulated according to the virtual manipulation of the virtual representation of the construction object (101'). Furthermore, the invention relates to a construction robot system (100) and a computer program product (108). The invention provides an intuitive and safe way of manipulating the construction object (101).

Fig. 3

EP 4 088 882 A1

**Description**

The present invention relates to a method of manipulating a construction object using a construction robot system, wherein the construction robot system comprises at least two robotic arms.

Imitating human motion, in particular imitating movements of human arms, is a known approach for controlling a single robotic arm.

Typical manipulations of construction objects on a construction site often are of high complexity and require, thus, a joint manipulation of two or more robotic arms or their respective end effectors. If, for example, a large pipe is to be mounted on a ceiling, the pipe should be grasped at several different locations along the pipe, and, for example, safely moved to a final mount position on the ceiling. Furthermore, the pipe may be attached, e. g. screwed, to the ceiling, which may require controlling further robotic arms or end effectors.

Obviously, in such situations individually controlling a plurality of robotic arms or end effectors by having the robotic arms imitate movements of human arms is at least tedious for a user or, in case of more than two robotic arms, even impossible, as the user only has two arms.

Therefore, it is an object of the present invention to provide an intuitive and safe method of manipulating a construction object on a construction site using a construction robot system, wherein the construction robot system comprises at least two robotic arms.

This is achieved in a number of aspects of the present invention, in which a first aspect is a **method of manipulating a construction object on a construction site,** for example positioning, moving, or working the construction object, using a construction robot system, wherein the construction robot system comprises at least two robotic arms, wherein a controller virtually manipulates a virtual representation of the construction object, and wherein a control unit of the construction robot system controls the robotic arms such that the construction object is manipulated according to the virtual manipulation of the virtual representation of the construction object.

The controller may be an entity defining the manipulation of the construction object of any kind. For example, it may be a, in particular human, user. Alternatively, it may be a machine, e. g. a computer on which a corresponding computer program is run.

Thus, a basic idea behind the invention is that the controller does not need to specify individual movements of each one of a plurality of robotic arms, as this is often, in particular if more than two robotic arms are to be jointly controlled, simply not possible. Rather, the controller defines the intended manipulation on the construction object itself. If, for example, the construction object is to be moved, the controller may virtually grasp the virtual representation and then virtually move it to a target pose, thus yielding an intuitive interface between the controller and the construction robot system.

The construction robot system may then be configured to translate the controller's input into control signals for the robotic arms.

Along with that, instead of requiring the controller to take care of possible conflicting situations that might arise, the construction robot system may be configured to avoid such conflicting situations, thus augmenting safety during operation of the construction robot system. Furthermore, this may also release the controller from knowing the technical behavior of the robotic arms in detail.

In this context, the construction object may be any kind of manipulatable object on a construction site. Thus, it may be or comprise, for example, a wall, a ceiling, or a floor, or a part of one of these. It may also be or comprise a plate, a bracket, a tube, a pipe, an anchor, or the like. Moreover, it may also be or comprise a tool, e. g. a drill bit or a chisel, a power tool, or the like or a combination thereof.

The controller virtually manipulates the virtual representation of the construction object. This interaction may be represented graphically, for example by graphically displaying a virtual space. In general, this interaction may use any method suitable to define the intended manipulation of the construction object. Likewise, for example if a plurality of similar manipulations is intended by the controller, the interaction may, additionally or alternatively, use textual input, for example in the form of data lists representing the construction object or construction objects to be manipulated and their respective intended manipulations.

Moreover, at least some of such conflicting situations between two or more of the robotic arms may be avoided in advance by principle. For example, as the construction robot system jointly controls the robotic arms, communication between the robotic arms for solving conflicts relating to individual differences in path planning between at least two of the robotic arms, is not required.

Each one of the robotic arms may have several degrees of freedom (DOF), for example by having several joints and / or by comprising a mobile base having a plurality of DOF. The DOF may be rotational and / or translational. A pose of a robotic arm may thus be described by a vector having all DOF of the robotic arm as elements. A pose of the construction robot system may be described as a vector having all DOF of all of the robotic arms or, in case only a subset of the robotic arms is considered, of the robotic arms under consideration, as elements.

The method according to the invention may be used with a plurality of robotic arms, e. g. at least 3, 4, 5, 6 or more robotic arms. As a particular advantage, the method may be applied to construction robot systems having a high total number of DOF, e. g. construction robot systems having at least three robotic arms à 6 DOFs, thus totaling to 18 DOFs or even more.

Each one of the robotic arms may comprise at least one end effector for manipulating the construction object. In particular, the end effector may be configured to work the construction object, for example to grasp, drill, grind, chisel, paint, and / or to sense, e. g. optically or mechanically sense, the construction object.

For the purpose of description of the invention, "construction site" may be understood in a broad sense and may, for example, also comprise pre-fabrication sites or the like, in particular, sites where the same or at least similar manipulation tasks on construction objects are to be executed.

The method may use a Newton-based iterative procedure.

In principle, the method may also be implemented by handling higher order problems, e. g. by using artificial intelligence algorithms like neural networks or the like, though such approaches usually require extensive training data and / or vast computing resources.

In a particularly preferred embodiment of the invention the controller may define the manipulation of the construction object using at least one of an AR device or a VR device. "AR device" may stand for a human-construction robot interface device providing an augmented-reality space. An augmented-reality space may comprise real-world information, in particular visual information, of the construction site and / or the construction object. The real-world information may, for example, be gathered by one or more camera systems, for example 3D-camera systems. The augmented-reality space may further comprise artificially generated information generated by the construction robot system itself.

The artificially generated information preferably may be presented visually. In particular, an AR device may present real-world information overlaid by artificially generated information. So, the controller may be presented an image showing, for example, a real-world image of the construction object to be manipulated and some or all of the robotic arms and, additionally, an artificially generated handle representing intended manipulations, e. g. a movement, of the construction object as an overlay image.

In contrast to an AR device, a VR device may be configured to present solely artificially generated information, e. g. a computed image showing an artificially generated representation of the construction object to be manipulated, an artificially generated representation of some or all of the robotic arms and, additionally, an artificially generated handle representing intended manipulations as a single image.

It is to be understood that in both cases, i. e. in the cases of using an AR device or a VR device, the controller manipulates virtual representations of the construction object, either generated from real-world information or generated completely artificially.

Furthermore, the construction robot system may comprise an input device, e. g. a 2D- or 3D-pointer, e. g. a computer mouse, a virtual reality glove, or the like, for inputting the intended manipulation of the construction object.

Alternatively, or additionally, the controller may input the intended manipulation of the construction object acoustically, in particular by speaking. For this, the method may also comprise a step of speech recognition.

The method may comprise a step of calculating a subsequent pose of at least one of the robotic arms or, preferably, of calculating a subsequent pose of the construction robot system as a whole. For this, the calculation may start from a current pose. It may comprise an optimization step. The optimization step may aim at nearing the at least one of the robotic arms or, respectively, the construction robot system, towards a target pose. The optimization step may, in particular, be or comprise an inverse kinematics (IK) optimization.

This optimization step may provide a subsequent pose representing an optimum in regard to a first set of optimization criteria. In particular, in case that several solutions exist having similar degrees of optimization in regard to this first set of optimization criteria, a second set of optimization criteria can be applied for finally defining the subsequent pose.

Thus, in a preferred variant of the method according to the invention, for defining a subsequent pose a first new pose and an alternative to the first new pose of the construction robot system may be calculated.

A possible occurrence of singularities in the course of controlling a robotic arm and, in particular, of controlling a plurality of robotic arms often pose severe problems.

In the context of the invention, a singularity may be understood as a pose and / or configuration of one or more robotic arms where only a reduced subset of DOF is available. Singularities may, for example, arise at borders of a region of reach of a robotic arm. A measure of manipulability may quantify a risk of getting to a singularity. A typical measure of manipulability may, for example, indicate a distance of a current pose of the robotic arms to the next singularity.

Thus, a second set of optimization criteria may comprise, for example, a condition relating to the measure of manipulability.

So, in order to avoid such singularities, a measure of manipulability may be calculated. It can then be monitored for critical values. When reaching a critical value in the course of planning a subsequent change of pose, an alternative pose may be searched.

Preferably, a search for a subsequent pose may take a current or future manipulability into account, for example by searching for a subsequent pose while optimizing for the measure of manipulability.

Alternatively, or additionally, the method may be adapted to at least one singular pose of at least one of the robotic arms. For example, a search algorithm for searching a subsequent pose may be preconfigured for characteristics relating to singularities of the robotic arms. Preferably, the method may be configured to avoid at least one singular pose of at least one of the robotic arms.

For many manipulation tasks the robotic arms, in particular their end-effectors, do not actually have to have a precise pose, as long as it can still guarantee a correct positioning and orientation of the construction object. Examples are installations of glass panels using suction cups, positioning brackets on a wall or a ceiling by gripping the bracket, or the positioning and fastening of pipes or tubes to a ceiling on the construction site. These can be seen as available degrees of freedom, which the method according to the invention may leverage.

The manipulability may be improved, in particular, for each of the robotic arms, if a DOF of at least one of the robotic arms is opened. This may enable, for example, first order modifications of a pose to search for a local or global optimum of manipulability. The choice of the DOF to be opened, preferably a rotational DOF, may depend on the construction object and / or on the type of manipulation. E. g. if a plate-like construction object like the above-mentioned glass panels is to be moved, the relative direction of an end effector of the robotic arm may be of less importance, thus a corresponding rotational DOF may be chosen.

Additionally, or alternatively, if a DOF is already free, e. g. due to geometrical characteristics of the construction object or the robotic arms, this free DOF may also be considered for an optimization of manipulability.

The flexibility and versatility of the construction robot system and, thus, of the method according to the invention may be enhanced if the construction robot system comprises at least one mobile base.

Thus, preferably, the control unit may control at least one mobile base of the construction robot system. The at least one mobile base may provide additional DOF, which may increase the choice of DOF to be opened.

The construction robot system may comprise a plurality of mobile bases. The method may also be applied to construction robot systems having a swarm-like number of mobile bases, for example at least 10 mobile bases, each being equipped with at least one robotic arm. In general, a higher number of mobile bases and / or a higher number of robotic arms may increase the flexibility of use. The allowable maximum payload may be increased. Also, more complex manipulation tasks may be executed.

For a particularly resource-efficient calculation, which, particularly, may be applied in the case of construction robot systems without mobile bases or having omnidirectional mobile bases, a pose vector q may be optimized. For example, in the case without a mobile base and with n robotic arms each having 6 rotational joints and thus 6 DOF, each of which being rotational DOF characterized by angles, the pose vector q may comprise n times 6 elements corresponding to the angle values of the rotational joints.

An even more versatile applicability of the method may be provided if a velocity vector u or a mixed pose-velocity vector <q, u> is optimized. In particular, in this case, the method may also be applied to other embodiments of the construction robot system, e. g. having only unidirectional or semi-omnidirectional mobile bases, i. e. not having omnidirectional mobile bases. Velocity-related elements of such vectors may relate to first order derivatives of, for example, cartesian coordinates, lengths or distances, or angle values.

Furthermore, this approach also permits to plan trajectories instead of only planning a subsequent pose of the robotic arms or the construction robot system.

In particular in the case of a plurality of robotic arms, planning trajectories or even only planning subsequent poses may lead to collisions, for example between a pair of the robotic arms.

Thus, preferably, the method may include minimizing the risk of collisions or avoiding collisions, in particular between at least a pair of the robotic arms. For this, additional constraints may be introduced into the optimization. Additionally, or alternatively, such a collision avoidance may also form part of the second set of optimization criteria.

In an analogous manner the control unit may be configured to control at least one of the robotic arms, in particular if required by the manipulation task, such that the construction object is regrasped.

Depending on the complexity of the intended manipulation, the method may be configured to provide a tele-operational control of the robotic arms or an autonomous control of the construction robot system.

In the case of manipulation tasks of rather low complexity, e. g. moving the construction object to another position, the method may comprise repeating at least two steps, in which a first step comprises the controller inputting a target pose of the construction object and in which a second step comprises the control unit controlling, for example as described above and further below, the robotic arms such that that the construction object reaches the target pose.

In particular for the case of manipulation tasks of rather high complexity, e. g. positioning and fixing the construction object to a ceiling, the method may comprise a step of path planning.

The step of path planning may comprise a translation of a target construction object pose, e. g. as inputted by the controller, into one or more target poses of end effectors of the robotic arms of the construction robot system.

For this, the step of path planning may comprise dividing the manipulation task into one or more subtasks. For example, the manipulation task of positioning and fixing the construction object to the ceiling, may be divided into a first subtask of grasping the construction object, a second subtask of moving the construction object to a target pose, and a third subtask of fixing the construction object to the ceiling.

The subtasks may be divided further. For example, the subtask of moving the construction object to a target pose may comprise a step of planning a trajectory from a current pose to a target pose of the end effectors, and another step of repeatedly defining and reaching poses of the construction robot system, in particular of the robotic arms and / or the mobile bases, such that the construction robot system follows the planned trajectory.

The path planning, in particular the definition of substeps, may be configured to depend on properties of at least one of the construction robot system, in particular of the robotic arms and / or the mobile bases, the construction object to be manipulated, the construction site, a building information model (BIM) data set describing the construction site as-is or to-be, or the intended manipulation task.

For example, in the above-mentioned case of a plate-like construction object, other DOF may be available, but also other constraints, e. g. due to the dimensions or the fragility of the construction object, than in the case of a bracket as construction object to be attached to a wall.

As another example, only a subset of robotic arms and / or mobile bases may be controlled by the control unit. The subset may be chosen dynamically. So, for example, if some of the robotic arms are close to the construction object and other robotic arms are further away and the manipulation task requires only a few of the robotic arms, only a respective subset of robotic arms may be chosen and employed, in particular controlled, for executing the manipulation task. This may also avoid conflicting situations as for some manipulations, e. g. moving the construction object, using too many robotic arms may increase the risk of collisions, or the like.

The method may also comprise a step of object recognition, for example using image recognition. Thus, a type and / or the pose of the construction object may be autonomously recognized, which may be used, e. g., for path planning, in particular for planning the trajectory, and / or as feedback for a successful execution of a subtask or the like.

The object recognition may also serve to avoid collisions with obstacles being placed on the construction site.

Additionally, or alternatively, using an AR device or a VR device, the controller may be shown obstacles or the like, thus enabling the controller to re-plan a manipulation, in particular to re-plan a trajectory, e. g. during a tele-operation of the construction robot system.

In a further aspect, the invention relates to a **construction robot system** comprising at least two robotic arms and a control unit, wherein the control unit is configured to control at least a plurality of the robotic arms according to the method as herein described. Preferably, the control unit may be configured to control all of the robotic arms according to the method as herein described.

The construction robot system may be configured to at least one of attaching to a construction object, for example grasping the construction object, positioning or moving the construction object, drilling, chiseling, grinding, plastering, painting, or the like.

The construction robot system may comprise at least one mobile base, in particular it may comprise a plurality of mobile bases.

The at least one mobile base may be configured for moving on a floor, a wall or a ceiling. It may comprise wheels and / or tracked wheels. Alternatively, it may also be or comprise a legged mobile base. Additionally, or alternatively, the construction robot system, in particular the mobile base, may be or comprise an aerial vehicle, in particular an unmanned aerial vehicle configured for construction works, also known as a "construction drone".

Each mobile base may comprise one or more of the robotic arms. In particular, in one embodiment of the construction robot system all robotic arms may be mounted on the same mobile base. In another embodiment the construction robot system comprises two or more, for example two or three, mobile bases each having at least one of the robotic arms.

In some embodiments the construction robot systems may have a swarm-like number of mobile bases, for example at least 10 mobile bases. Each of these may be equipped with at least one of the robotic arms.

The at least one mobile base may be unidirectional, semi-omnidirectional or omnidirectional. Whereas an omnidirectional mobile base, e. g. a construction drone, may be movable in any direction in a two-dimensional plane or even in a three-dimensional space, a unidirectional mobile base may be limited to movements along some directions within the two-dimensional plane or within the three-dimensional space. For example, a mobile base having tracked wheels may be unidirectional.

A semi-omnidirectional mobile base in the context of this invention may be or comprise a unidirectional mobile base and may be equipped with a robotic arm having an omnidirectional working range. Thus, a construction robot having a semi-omnidirectional mobile base may be moved, e. g. manually, to a center point. Then, at least within the reach of the robotic arm and relative to the center point, the construction robot may be controlled as if it was omnidirectional.

The construction robot systems having unidirectional and / or semi-omnidirectional mobile bases may be configured for heavy duty work, in particular at height.

In some embodiments, for example, the construction robot system may be configured to manipulate, in particular to move or carry, a construction object having a weight of 100 kg or more, preferably of 300 kg, or more.

The construction robot system may comprise a control unit. The control unit may be configured to control at least one of the robotic arms according to the method as herein described. It may also be configured to control at least one of the mobile bases.

The control unit may be integrated into at least one of the mobile bases or the robotic arms. Additionally, or in the alternative, the control unit may be, or at least partly, external to the remaining the construction robot system. The control unit may be, at least partly, part of a cloudbased computing system.

In a preferred embodiment at least one of the robotic arms may comprise an end effector for manipulating, for example, the construction object to be manipulated.

The end effector may comprise a tool holder for holding a tool, e. g. a power tool, a gripper, or the like. The end effector may comprise a connection element for connecting the robotic arm, in particular the end effector, to the tool, the power tool, the gripper, or the like.

The robotic arm, in particular the end effector, may comprise at least one sensor. The sensor may be a pose detection sensor, for example for detecting a pose or angle of a joint of the robotic arm. Additionally, or alternatively, it may also comprise a sensor for acquiring environment data, e. g. about the construction object or the construction site. The sensor may be or comprise, for example, a distance sensor, for example a LIDAR, or a 3D camera system.

Moreover, it may be or comprise a force and / or an acceleration sensor.

In particularly preferred embodiments, the construction robot system may comprise at least one of an AR device of a VR device.

The construction robot system, in particular its control unit, may be configured such that the controller may define an intended manipulation of the construction object using at least one the AR device or the VR device. The AR device or the VR device may comprise at least one display, e. g. in form of a head-mounted display.

Furthermore, the construction robot system may further be configured to present information as described above in relation to the method according to the invention.

Furthermore, the construction robot system may comprise an input device, e. g. a 2D- or 3D-pointer, e. g. a computer mouse, a virtual reality glove, or the like, for inputting the intended manipulation of the construction object. In general, the construction robot system may comprise a VR controller. The VR controller may monitor at least 3 DOF, preferably at least 6 DOF as input. The construction robot system may also be configured for hand tracking.

Alternatively, or additionally, the construction robot system may comprise an acoustic input device, for example a microphone. It may further comprise a sound recognition unit, in particular a speech recognition unit. It may, thus, be configured such that the controller may input the intended manipulation of the construction object by speaking or by acoustical gestures.

Another aspect of the invention relates to a computer program product including a storage readable by a control unit of a construction robot system as herein described, the storage carrying instructions which, when executed by the control unit, cause the construction robot system to execute the method as herein described.

The invention will be described further, by way of example, with reference to the accompanying drawings which illustrate preferred variants thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

**In the drawings:**

Figure 1          shows a flow chart of the method;

Figures 2a to 2d     schematically show a construction robot system with two robotic arms in different poses;

Figure 3          shows a construction robot system;

Figure 4          shows a virtual representation of a construction object and a virtual representation of a construction robot system; and

Figure 5          shows a virtual representation of another construction object and a virtual representation of another construction robot system.

Same reference signs are used for functionally equivalent elements within the description and in the figures.

In the following descriptions of variants of the method according to the invention and of embodiments of the construction robot system according to the invention the controller is assumed to be a human user. Albeit, the invention is not limited to specific types of controllers.

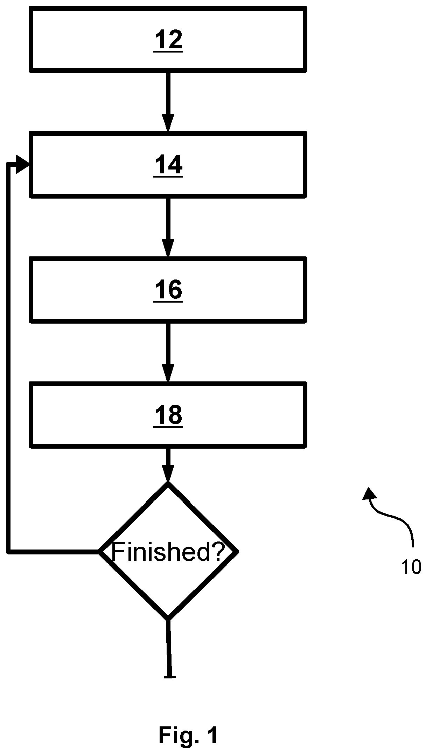

**Figure 1** schematically shows a flowchart of an example of the method **10** according to the invention, which will be described in more detail in the following section.

In a first step **12** a start configuration is registered. In particular, poses of a construction robot system to be controlled and a pose of a construction object to be manipulated are detected. Also, other data, e. g. the type of the construction object, may be gathered, e. g. by object recognition.

In a further step **14** a user is presented a virtual representation of the construction object using an AR device.

In another step **16** the user virtually manipulates the virtual representation of the construction object using a 3D input device, e. g. a virtual reality glove. In this way, the user inputs the intended manipulation of the construction object into the construction robot system, in particular into a control unit of the construction robot system.

In a variant of the method, the step 16, if required in combination with step 14, may comprise inputting a plurality of manipulations of one or more construction objects, so that the user may input manipulation tasks of very high complexity, e. g. mounting a plurality of installation elements to a ceiling.

In a next step **18** the control unit controls robotic arms and/or mobile bases of the construction robot system such that the construction object is manipulated according to the virtual manipulation of the virtual representation of the construction object. This step 18 will be described in more detail further below.

The steps 14 to 18 may then repeated until all manipulation tasks the user intends to execute are executed.

Step 18 of controlling robotic arms and/or mobile bases comprises several sub-steps:

In a step of path planning a trajectory of target poses of end effectors is defined.

Subsequently, the construction robot system is controlled such that each one of the target poses of the end effectors is reached. In this example, this includes:

- choosing a subset of DOF to be optimized, in particular choosing a subset of robotic arms, including mobile bases, to be employed and selecting which of the DOF available within the chosen subset of robotic arms to open;
- calculating a target pose of the construction robot, in particular of the subset of robotic arms and mobile bases, such that it corresponds to a current target pose of the end effectors, accounting for an optimum of manipulability;
- moving to the target pose of the construction robot;
- acquiring feedback whether the moving was successful, for example by visual object recognition of the construction object and / or the construction robot system or parts thereof, including a localization of the construction object and / or the construction robot system or parts thereof;
- in case of failure: either updating the path planning by re-executing the step of path planning or requesting a user interaction to decide on the continuation of the manipulation;
- repeating until all target poses of the end effectors have been reached.

The method may also include further steps, for example changing an end effectors functionality, e. g. from gripping to drilling, chiseling, painting, or the like. Also, for one or more kinds of subtasks or for these further steps, preconfigured programs may be executed on the control unit, e. g. for softly approaching an end effector to the construction object, for drilling into the construction object or into another element of the construction site, or the like. Also, it is well to be understood that the method as described in this example comprises several steps which may be optional, e. g. the repeated choice of DOF, the acquiring of feedback, the failure detection and handling, etc.

The following section presents several ways for calculating the target pose of the construction robot, accounting for an optimum of manipulability:

As already described, the invention proposes to utilize open or opened DOF in order to optimize a manipulability, here a manipulation index, of the construction robot system, in particular of the robotic arms and / or the mobile bases under consideration.

In particular, the manipulation index may be considerably improved by freeing at least one rotational degree of freedom. That is, an end effector is allowed to, for example, grasp the construction object with a specific pose, with respect to a construction object's frame of reference, while allowing the end effector to rotate around a rotational axis.

Manipulability may be considered as part of a global optimization problem, which may balance pose accuracy with an improved manipulability index or only use it to detect proximity to singularities.

In this example of the method, it is suggested to treat the problem as a bi-level optimization problem, which optimizes manipulability in a null space of a velocity Jacobian at a valid grasping pose.

The presented approach is based on a Newton's method. It may include a twist: Instead of using the gradient of the objective function, a manipulability gradient may be projected on the null space of the velocity Jacobian.

Thus, the problem may be formulated as a bi-level optimization problem as follows:

$$\begin{aligned} \max_{\mathbf{q}} \quad & m^2(\mathbf{q}) \\ \text{s.t.} \quad & \mathbf{q} = \arg\min_{\hat{\mathbf{q}}} w_{\mathrm{e}} \|\mathcal{K}(\hat{\mathbf{q}}) - x\|^2 + w_{\mathrm{r}} \|\hat{\mathbf{q}} - \mathbf{q}_0\|^2 \\ & \mathbf{q}_{\min} < \mathbf{q} < \mathbf{q}_{\max}, \end{aligned} \qquad (1)$$

where q are the stacked joint angles of the robotic arms under consideration, qmin and qmax are the joints' upper and lower limits, K(q) is a forward kinematics function for the pose of the robot arms' end effectors, x is a target pose of the construction robot system, m is the manipulability index and q0 is a predefined rest pose, which is used as regularization.

The squared manipulability index is defined by

$$m^2(\mathbf{J}(\mathbf{q})) = \det(\mathbf{J}(\mathbf{q})\mathbf{J}(\mathbf{q})^T)$$

where J(q) is the velocity Jacobian.

In a first variant of the method the problem (1) may be solved numerically.

In a simplified, resource-saving approach the following alternative problem may be considered:

$$\begin{aligned} \min_{\mathbf{q}} \quad & w_{\mathrm{e}} \|\mathcal{K}(\mathbf{q}) - x\|^2 - w_{\mathrm{m}} m^2(\mathbf{q}) + w_{\mathrm{r}} \|\mathbf{q} - \mathbf{q}_0\|^2 \\ \text{s.t.} \quad & \mathbf{q}_{\min} < \mathbf{q} < \mathbf{q}_{\max}, \end{aligned} \qquad (2)$$

This problem (2) is simpler to solve, and indeed, can be very efficiently solved using Newton's method.

Preferably, the optimization terms are carefully balanced. Nonetheless, it may happen that the manipulability index remains poor.

Thus, a simple modification of Newton's method is suggested according to the invention, which alleviates the drawbacks of the above-mentioned methods. To this end, firstly, a way solving (3) using the standard Newton's method is presented:

Newton's method iteratively optimizes an objective function by solving the Newton equation Hdq = -g
where g and H are the gradient and Hessian of the objective, and dq is the search direction, which is fed into a line search procedure.

The corresponding gradient and Hessian in respect to the manipulability index are:

$$\frac{\partial m^2}{\partial q_k} = \det\left(\mathbf{J}\mathbf{J}^T\right) \operatorname{tr}\left( (\mathbf{J}\mathbf{J}^\mathbf{T})^{-1} \left( \frac{\partial \mathbf{J}}{\partial q_k} \mathbf{J}^T + \mathbf{J}\left(\frac{\partial \mathbf{J}}{\partial q_k}\right)^T \right) \right)$$

and

$$\frac{\partial^2 m^2}{\partial q_k \partial q_l} = \det\left(\mathbf{J}\mathbf{J}^\mathbf{T}\right) (t_1 \cdot t_2 - t_3 + t_4)$$

with

$$t_1 = \operatorname{tr}\left[ 2(\mathbf{J}\mathbf{J}^\mathbf{T})^{-1} \frac{\partial \mathbf{J}}{\partial q_l} \mathbf{J}^\mathbf{T} \right]$$

$$t_2 = \mathrm{tr}\left[2(\mathbf{JJ^T})^{-1}\frac{\partial \mathbf{J}}{\partial q_k}\mathbf{J^T}\right]$$

$$t_3 = \mathrm{tr}\left[(\mathbf{JJ^T})^{-1}\left(\frac{\partial \mathbf{J}}{\partial q_k}\mathbf{J^T}+\mathbf{J}\left(\frac{\partial \mathbf{J}}{\partial q_k}\right)^T\right)\right.$$

$$\left.(\mathbf{JJ^T})^{-1}\left(\frac{\partial \mathbf{J}}{\partial q_l}\mathbf{J^T}+\mathbf{J}\left(\frac{\partial \mathbf{J}}{\partial q_l}\right)^T\right)\right]$$

$$t_4 = \mathrm{tr}\left[2(\mathbf{JJ^T})^{-1}\left(\frac{\partial^2 \mathbf{J}}{\partial q_k \partial q_l}\mathbf{J^T}+\frac{\partial \mathbf{J}}{\partial q_l}\left(\frac{\partial \mathbf{J}}{\partial q_k}\right)^T\right)\right]$$

Thus, one approach to solve (1) is to first solve the lower level optimization problem (2nd line of (1) using any means, e.g. Newton's method, and then optimize to top level using a projected gradient descent.

This requires a projection of the gradient on the tangent of the constraints. In this case, this is the gradient of the manipulability index, projected on the null space of the velocity Jacobian.

Using this approach, however, means that first convergence of the low-level optimization must be reached before commencing with the manipulability optimization.

As an alternative the problem according to equation (2) may be solved using Newton's method but using a projected manipulability gradient throughout the optimization process.

This procedure is described in more detail in the following Pseudocode 1:

```
1: Initialize full gradient g as zero vector
2: Initialize empty Hessian matrix H
3: for every term of the objective function do
4: Calculate gradient
5: Calculate Hessian
6: if current term == manipulability term (that is m2(J(q))) then
7: Project gradient into null space of the Jacobian
8: end if
9: Add gradient of the current term to the full gradient
10: Add Hessian of the current term to the full Hessian
11: end for
12: Compute Search Direction dq = -H⁻¹ . g
13: Do Line Search
```

*Pseudocode 1. Assembling gradients of the objective function*

It should be noted that Newton's method works even if the Hessian used is not the actual Hessian of the objective. In fact, the matrix H in Newton's equation may be any positive definite matrix thus guaranteeing a descent direction. Second, the gradient may be artificially modified, as long as the dot product between the true gradient and the modified gradient is positive. So quasi-Newton methods may be allowed, which may further reduce the computing power required.

This will give a pose vector q corresponding to the pose of the construction robot system or, in a case of considering only a subset of robotic arms and / or mobile bases, for the subset.

The calculations as presented may be particularly useful for non-mobile construction robot systems.

It may also be used for omnidirectional construction robot systems, or, in general, to holonomic systems. For this, the additional DOF of the mobile base or mobile bases may be handled accordingly, e. g. by increasing the dimensionality of the pose vector q.

The same can be done in the case of semi-omnidirectional construction robot systems as long the intended manipulations may solely take place within the reach of the robotic arms, i. e. without moving the unidirectional mobile base.

The calculations may also be applied in a modified manner to construction robot systems having one or more unidirectional mobile bases, or, in general, to non-holonomic system, for example semi-omnidirectional construction robot systems. This is particularly interesting, as many typical manipulations imply heavy duty work and, therefore, adequately robust construction robot systems.

To do so, instead of doing the calculations for the pose vector q, similar, but slightly adapted calculations can be done for a velocity vector u or a mixed pose-velocity vector qmixed = <q,u>, thus integrating up to trajectories or at least partial trajectories instead of single poses q.

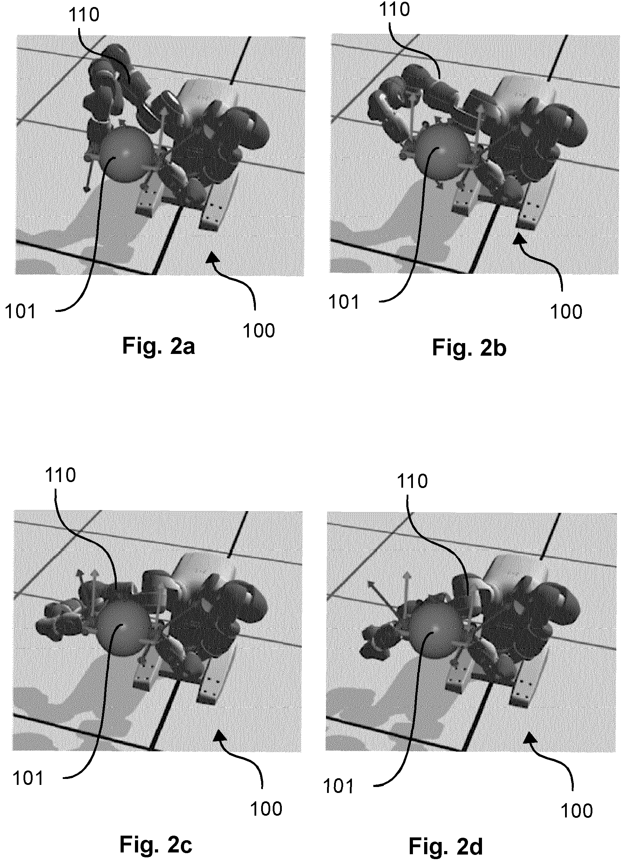

**Figures 2a to 2d** schematically show a construction robot system **100** with two robotic arms **110,** only one of which being marked with a reference sign.

As can be seen from a comparison of the figures 2a to 2d, the construction robot system 100 holds a construction object **101** at a fixed position, although poses of the marked robotic arm 110 vary according to a rotational axis. According to one aspect of the invention, the DOF corresponding to this rotational axis may be considered for optimizing the manipulability. Thus, a first pose according to figure 2a may and alternative poses according to figures 2b to 2d may be calculated including the corresponding manipulabilities. Then a pose having at least a sufficient or having the best manipulability may be chosen as subsequent pose of the construction robot system 100.

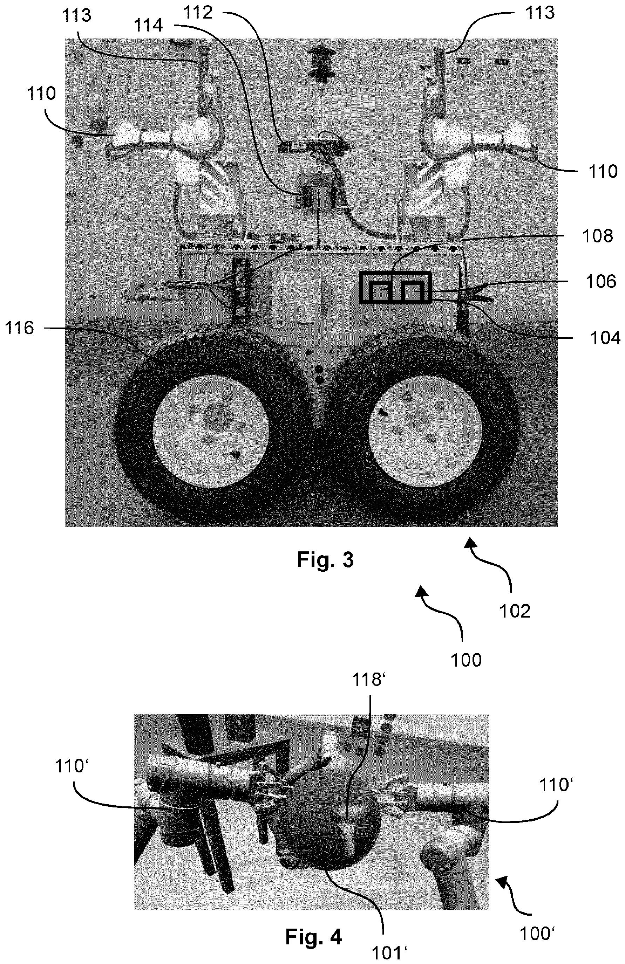

**Figure 3** shows a construction robot system 100 on a construction site, the construction robot system 100 comprising a mobile construction robot **102** and a control unit **104,** which is schematically represented in figure 3.

In this embodiment, the control unit 104 is arranged inside the mobile construction robot 102. It comprises a computing unit **106** and a computer program product **108** including a storage readable by the computing unit 106. The storage carries instructions which, when executed by the computing unit 106, cause the computing unit 106 and, thus, the construction robot system 102 to execute the method 10 as described previously.

Furthermore, the mobile construction robot 102 comprises two robotic arms 110. The robotic arms 110 are of similar type. Each of these have 6 DOF.

They comprise end effectors **113** (in figure 3 only schematically represented). The end effectors 113 may be detachably mounted to the robotic arms 110, so that their functionality may be adapted to the intended manipulation and / or the construction object to be manipulated. Currently, they are in the form of grippers.

The robotic arms 110 are mounted on a mobile base **116** of the mobile construction robot 102. In this embodiment, the mobile base 116 is a wheeled vehicle. It is unidirectional, thus, the mobile construction robot 102 may be considered as semi-omnidirectional.

Furthermore, the construction robot system 100 comprises an AR device (not shown) and a virtual reality glove (not shown).

The mobile construction robot 102 comprises a plurality of additional sensors. In particular, it comprises a camera system **112** comprising three 2D-cameras. It further comprises a LIDAR scanner **114.**

It may comprise further modules, for example a communication module, in particular for wireless communication, e. g. with an external cloud computing system (not shown in figure 3).

**Figure 4** shows an artificially generated image as may be presented by a VR device of a construction robot system to a user.

In particular, it shows a virtual representation of a construction object **101'.** For simplification, it is represented as sphere, although more realistic representations would also be possible.

Furthermore, figure 4 shows a virtual representation of a construction robot system 100' with three virtual representations of robotic arms **110'.**

A virtual controller **118'** may be controlled by a user. Using the virtual controller 118' the user may manipulate, e. g. move, the virtual representation of the construction object 101'. In particular, the virtual controller 118' may correspond to a VR controller, which, preferably, may be controlled by the user. The VR controller may be configured to sense movements in at least 3 DOF, or, preferably, at least 6 DOF.

Using the method 10, such manipulations are translated into real-world manipulations of a corresponding construction object using a corresponding, in this case 3-armed, real-world construction robot system.

As a result, the real-world construction robot system may be controlled by the user in a tele-operational manner.

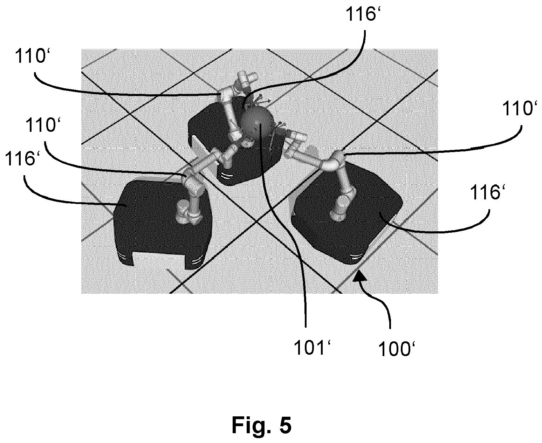

**Figure 5** shows a virtual representation of another construction object 101' and a virtual representation of another construction robot system 100'. The latter comprises three, in particular omnidirectional, virtually represented mobile bases **116',** each one having a virtually represented robotic arm **110'.** According to the method presented here, virtual manipulations of the virtual representation of the construction object 101' result in movements of the virtual representation of the whole construction robot system 100', that is of the three virtually represented robotic arms 110' and the three virtually represented mobile bases 116', and translate into corresponding real-world movements of corresponding real-world mobile bases and robotic arms.

As experiments have shown, the method according to the invention and the construction robot system according to the invention provide for an intuitive, fast and safe way for manipulations of construction objects using construction robots having a plurality of robotic arms. In particular, singularities may efficiently be avoided. Moreover, even when using usual computing equipment, manipulations, e. g. in form of tele-operations, may be executed in real-time.

**Claims**

1.   **Method** (10) of manipulating a construction object (101) on a construction site, for example positioning, moving, or working the construction object, using a construction robot system (100), wherein the construction robot system (100) comprises at least two robotic arms (110), wherein a controller virtually manipulates a virtual representation of the construction object (101'), and wherein a control unit (104) of the construction robot system (100) controls the robotic arms (110) such that the construction object (101) is manipulated according to the virtual manipulation of the virtual representation of the construction object (101').

2.   Method according to claim 1, **characterized in that** the controller defines the manipulation of the construction object (101) using at least one of an AR device or a VR device.

3.   Method according to one of the preceding claims, **characterized in that** for defining a subsequent pose of the construction robot system (100) a first new pose and an alternative to the first new pose are calculated.

4.   Method according to one of the preceding claims, **characterized in that** a measure of manipulability is calculated and / or that the method is adapted to at least one singular pose of at least one of the robotic arms (110).

5.   Method according to one of the preceding claims, **characterized in that** a DOF of at least one of the robotic arms (110) is opened.

6.   Method according to one of the preceding claims, **characterized in that** the control unit (104) controls at least one mobile base (116) of the construction robot system (100).

7.   Method according to one of the preceding claims, **characterized in that** a pose vector q is optimized.

8.   Method according to one of the preceding claims, **characterized in that** a velocity vector u and / or a mixed pose-velocity vector <q, u> is optimized.

9.   Method according to one of the preceding claims, **characterized in that** it includes minimizing the risk of collisions or avoiding collisions, in particular between at least a pair of the robotic arms (110).

10.   **Construction robot system** (100) comprising at least two robotic arms (116) and a control unit (104), **characterized in that** the control unit (104) is configured to control at least a plurality of the robotic arms (110) according to the method (10) of one of the preceding claims.

11.   Construction robot system according to the preceding claim, **characterized in that** it comprises at least one mobile base (116), in particular a plurality of mobile bases (116).

12.   Construction robot system according to one of the claims 10 to 11, **characterized in that** at least one of the mobile bases (116) is an omnidirectional base.

13.   Construction robot system according to one of the claims 10 to 12, **characterized in that** at least one of the mobile bases (116) is a unidirectional mobile base or a semi-omnidirectional mobile base.

14.   Construction robot system according to one of the claims 10 to 13, **characterized in that** it comprises at least one of an AR device of a VR device.

15.   **A computer program product** (108) including a storage readable by a control unit (104) of a construction robot system (100) according to one of the claims 10 to 14, the storage carrying instructions which, when executed by the control unit (104), cause the construction robot system (100) to execute the method (10) according to one of the claims 1 to 9.

**Fig. 1**

110

101

100

**Fig. 2a**

110

101

100

**Fig. 2b**

110

101

100

**Fig. 2c**

110

101

100

**Fig. 2d**

**Fig. 3**

**Fig. 4**

116'

110'

110'

110'

116'

116'

101'    100'

Fig. 5

Europäisches
Patentamt

European
Patent Office

Office européen
des brevets

## EUROPEAN SEARCH REPORT

Application Number

EP 21 17 2956

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FLORIAN KENNEL-MAUSHART ET AL: "Manipulability optimization for multi-arm teleoperation", ARXIV.ORG, CORNELL UNIVERSITY LIBRARY, 201 OLIN LIBRARY CORNELL UNIVERSITY ITHACA, NY 14853, 10 February 2021 (2021-02-10), XP081881002, * See sections III to VI and Fig. 1 to 4 * ----- | 1-15 | INV. B25J9/16 B25J5/00 |
| | | | TECHNICAL FIELDS SEARCHED (IPC) B25J G05B |

The present search report has been drawn up for all claims

| Place of search | Date of completion of the search | Examiner |
|---|---|---|
| The Hague | 5 November 2021 | Tsirigkas, Dimitrios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                

& : member of the same patent family, corresponding
document

EPO FORM 1503 03.82 (P04C01)